# EUROPEAN PATENT APPLICATION

(11) **EP 4 480 689 A2**
(43) Date of publication of application: **25.12.2024**
(21) Application number: 24177177.3
(22) Date of filing: 21.05.2024
(51) Int. Cl.: B31B 50/20, B31B 50/00, B31B 50/25, B31B 50/88, B31F 1/08, B31F 1/10, B60K 7/00, B23Q 9/00, B23K 26/08, B31B 100/00

(54) **MOBILE DEVICE WITH MULTIFUNCTIONAL TOOLS**

(30) Priority: 29.05.2023 PL 44503323
(71) Applicant: Werner Kenkel Sp. z o.o., 64-117 Krzycko Wielkie (PL)
(72) Inventor: Pieczonka, Jakub, 32-700 Bochnia (PL); Mis, Karol, 64-100 Leszno (PL); Kaminski, Patryk, 67-400 Wschowa (PL); Pietrzak, Kamil, 64-100 LEszno (PL)
(74) Representative: Gornicki, Pawel

(57) **Abstract**

The object of the present invention is a mobile device with multifunctional tools, in the form of a self-moving platform providing movement of the device in the X and Y axes, comprising a rigid base with a drive unit and a tool assembly moved in the Z axis, characterised in that at least the power source (400), the camera (500), the drive wheel assemblies (200) with omni-directional wheels (201), the low-level controller unit (100), with low-level controller (101), the high-level controller unit (700), and the cutting tool unit (600), comprising at least a cutting tool (602) are attached to the rigid base (900).

## Description

The object of the present invention is a mobile device with multifunctional tools, in particular for die-cutting cardboard packaging. It can find application in cutting of various types of objects, especially packaging made from solid cardboard, corrugated cardboard or other types of material, at the prototyping stage of such packaging and/or for low-volume production of finished packaging. The device allows notching and cutting of various types of material, as well as creasing, so that the cut and creased material can be shaped in accordance with its intended use.

There are plotters that are known to have the ability to cut in cardboard as well as crease it. Their construction usually consists of a working table with defined dimensions and a head that moves over the working area. Tools such as a knife, creasing tool are mounted on the head.

Standalone cutting and creasing plotters have a limited working area. The maximum size of material to be processed must not exceed the size of the working table. There are also known solutions of drawing/printing plotters where the material is automatically fed from a reel and only the width of the plotter is a dimensional limitation. These devices are usually of considerable size. This requires the selection of a suitably large site where such a plotter and its additional equipment (electrical installation, control computer, air compressor, etc.) could be located. In addition, a properly levelled room floor and access to utilities are required. Due to the use of higher-powered components and tools associated with the device's dimensions, they consume significant amounts of electricity. The cost of purchasing and servicing the above mentioned devices is also high. The servicing of such devices usually takes place at the site of their installation, which generates additional costs related to service visits and extended repair times, if the service technician does not have the necessary components on hand.

US2015003927A1 discloses a portable device for drilling holes in aircraft wings, having a platform to which sets of wheels are coupled with a system for driving the wheels, allowing movement of the tool in any direction. The device has an attachment mechanism that is placed on the underside of the platform to secure the device to the surface. A control board is used to control the operation of the device. A drill spindle assembly is connected to the platform. A drill feed assembly is connected to the drill spindle assembly to raise and lower the drill spindle assembly. External sensors detect magnets positioned below the surface and are used to more accurately determine the position of the device on the work area during operation. A drive table is used to position the drill spindle assembly in the XY plane based on the output of the aforementioned sensors. The device is compact in size, allowing its effortless handling. A tool is mounted on the platform that allows engraving and cutting in the material on which the device moves directly.

Devices described in publications CN215615799U, CN215747068U, CN206415771U are compact platforms that are easy to transport. Due to the drives used, they have the ability to move in any direction on the surface of the material to be processed. There is a laser tool on the platform, which allows engraving and cutting.

CN211306315U reveals a compact mobile platform. The drives used allow movement in any direction, the mounted tool allows drawing on the surface on which the device moves.

EP3403761 discloses a device for milling and cutting in wood. The size of the device allows it to be easily transported. The drives used allow movement in any direction. During operation, the device moves directly across the machining surface. It has fewer format limitations than a standard CNC, but requires the user to take measurements with special turrets to define the working area, and then it is necessary to fix them to the raw material on which the device is working. This operation requires time and the use of an additional tool, such as a power screwdriver. The working area is limited by means of its defining - with the turrets and by the size of the material and/or the length of the cables in the turrets. The tool used, in the form of a milling cutter, limits the choice of materials in which it is possible to cut. It is impossible to cut out and/or draw on solid cardboard, corrugated cardboard or paper. The lack of a creasing tool does not allow shapes and solids to be formed from the cut materials.

The packaging design cycle most often involves a series of consultations with the client, including the production of a prototype on which changes need to be made on an ongoing basis. Standalone cutting and creasing plotters, due to their limitations, primarily in terms of size, are not able to carry out such a cycle. Hence the need to design a device that has all the functions of standalone CNC plotters, which at the same time is easy to transport and is compact in size.

A further aim of the invention is to develop a tool system whose working units can easily and safely produce any packaging profile on a cardboard sheet of any size.

The object of the present invention is a mobile device with multifunctional tools, in the form of a self-moving platform providing movement of the device in the X and Y axes, comprising a rigid base with a drive unit and a tool assembly moved in the Z axis, characterized in that to the rigid base, at least the following are attached:
- three drive wheel assemblies arranged in radial axes, each at essentially equal angular distance, with the omni-directional wheels fixed by an axle to the shaft of the drive motor; the common radius on which the omni-directional wheels are mounted is the distance from the centre of this circle to half the thickness of the wheels; each drive unit is wired to the control unit;
- a low-level controller unit, consisting of at least one low-level controller;
- a high-level controller unit, which is a microcomputer with software;
- a cutting tool unit comprising at least a cutting tool;
- a power source, preferably a rechargeable battery;
- a camera;
whereby the drive wheel assemblies and the cutting tool unit are connected to the low-level controller unit and the high-level controller unit, which are also basically connected to the power source and the camera.

In a preferred embodiment of the invention, a creasing unit containing at least a creasing tip and a creasing unit drive motor is mounted to the rigid base, the creasing unit being connected to the low-level controller unit, and the high-level controller unit.

In addition, the creasing tip can be rigidly connected to a sleeve equipped with a lower bearing and an upper bearing, with the sleeve being driven by a shaft with a gear wheel and eccentric mounted transversely to it.

In addition, the crease unit drive motor can be attached to the drive motor mount and connected to the power source and low-level controller, while the drive motor mount is detachably connected to the creasing unit body.

In a preferred embodiment, the device comprises the crease unit height motor attached to the base, whose vertical shaft axis is connected by a coupling to an adjustment screw rotating in a nut fixedly connected to the creasing unit holder connecting the creasing unit body and the linear bearings of the holder, moving along pins fixed perpendicularly to the base.

In a preferred embodiment, it includes a limit switch, wired to the low-level controller and attached to the base.

In another preferred embodiment, the working element of the creasing unit is a creasing wheel.

In further preferred embodiment, the mobile device contains three drive wheel assemblies, spaced at an angular distance of essentially 120°.

In another embodiment of the invention, the omni-directional wheels comprise at least one wheel body in which rolling elements are circumferentially mounted and are connected to the motor gearbox by means of a connector joining the wheel to the shaft of the gearbox, which is integrated with the drive motor and is a component that connects to the gearbox assembly with the motor, which in turn is connected by wires to the low-level controller.

In a preferred embodiment, the cutting tool is a laser equipped with a pressure nozzle and mounted on a rail connected to the base.

In another preferred embodiment, the mobile device is equipped with a compression system comprising a compressor connected by a compressed air hose to the laser nozzle.

In addition, the mobile device is provided with an negative pressure unit, equipped with a suction turbine mounted tightly in the exhaust extraction housing, tightly connected to the base above the exhaust filter with housing.

In another preferred embodiment, the drive unit can be a stepper motor or other motor with an encoder suitable for monitoring the motor.

The mobile device may additionally be equipped with a print application unit including a pen, pencil, ballpoint pen or printer, or a labeller, and/or an adhesive applicator or other type of plastic extruder, and/or a water cutting, air cutting and/or milling unit and more.

The operation of the device is managed by a computer, which controls its movements and functions according to a clearly defined work programme. Using the interface, a file is loaded which is previously prepared in a graphics software and then exported, preferably in ACM format. The start of operation is initiated by an appropriate command, sent to the device via a Bluetooth or Wi-Fi module responsible for communication with the computer, after which the data processed during shape import is sent. This data is suitably computed information, defining the distance between the points the device is to navigate and what tool it is to use.

The device subject of the application is characterised by its small size and low weight compared to desktop plotters. This makes it possible to move, transport and use the device in rooms not previously adapted for this purpose. It is also characterised by the absence of format limitations with regard to the working area, the only limitation being the size of the material and the room in which the device operates. The working area where the platform operates does not need to be adapted in any way; it is also possible to operate the device outdoors. It moves directly on the material to be processed, which is placed on a prepared substrate placed on a flat surface, and no additional activities related to attaching any additional elements to the material are necessary.

The device does not need to be installed and connected to the mains (only when charging the battery with the charger - standard socket - 230 V voltage) and no additional installation or electrical protection is required.

The invention does not require the use of any additional compressed air system like some devices known in the art.

Another important advantage is that the device allows for following a pre-set machining path or setting machining parameters in real time in order to guide the device along the surface of the part being machined.

Another important advantage of the invention is obtaining a tool system with reduced purchase, maintenance and operating costs.

Controlling the device is intuitive, with no training or specialist knowledge required. The invention can be managed through a dedicated website, software, device control interface. Communication with the platform takes place through the internal network generated by the device, allowing the user to control the plotter from a variety of devices - PC, laptop, tablet or smartphone, without internet access.

The use of a cutting tool in the preferred version, which is a laser, makes it possible to increase the aesthetics of the cut and its accuracy in comparison with devices in which a knife is used. The shape of the knife is crucial for cutting perforations - sequences of cuts and bridges - which may have different lengths on the inside and outside of the material in which cutting is performed. In addition, the blade degrades, making it necessary to replace it frequently, which generates additional costs.

In a preferred embodiment of the invention, the mobile device is capable of printing, writing, cutting, creasing, engraving, water cutting, air cutting, milling and more. With the ability to process a wide range of materials (i.e. paper, cardboard, leather, plastics, textiles, foils, wood, metals, etc.) at any given location, there is no need to purchase several machines and/or tools - this generates considerable savings with regard to machinery equipment.

The reduced and smaller amount of materials used in the production of the mobile device compared to desktop plotters, as well as its lower energy consumption, contribute to reducing waste and emissions. The mobility of the device allows the supply chain of manufactured products to be shortened, thereby reducing the carbon footprint.

The device is characterised by a high level of operational safety thanks to the use of various sensors and monitoring mechanisms.

The technical objective as well as the specified objectives were achieved in accordance with the attached independent claim.

Preferred embodiments are described in the dependent claims.

Changes may be made to the invention without departing from the scope of the inventive concept set out in the claims.

Although embodiments of the present invention have been described with reference to various specific variants, it will be apparent to those skilled in the art that some variants can be embodied with modifications in the scope of the claims.

The object of the invention, along with its preferred embodiments, is described in detail in the examples below and in the drawing where:

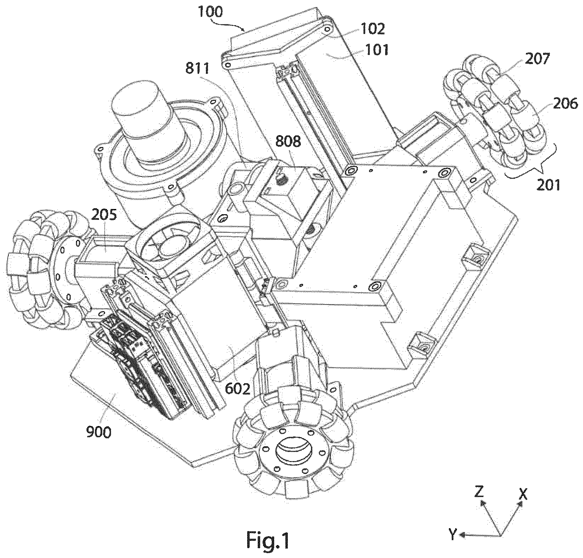

Fig. 1 shows the device of the present invention in a preferred configuration in axonometric view;

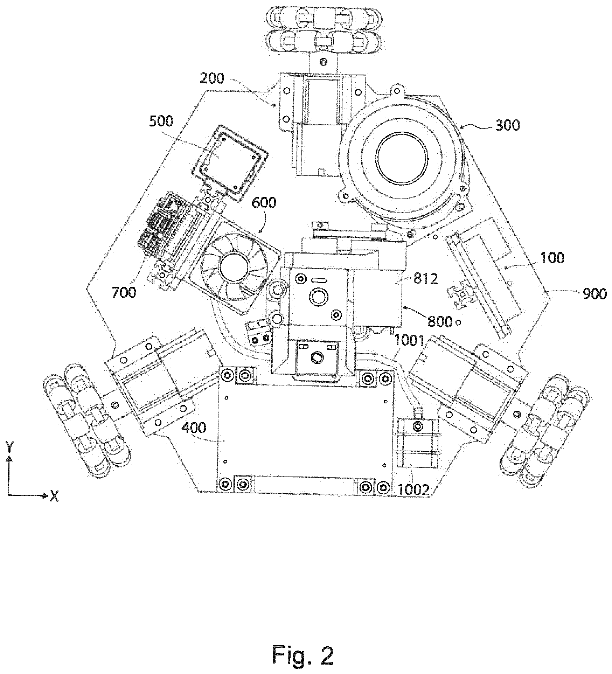

Fig. 2 shows a top view of the device platform in a preferred configuration of the present invention;

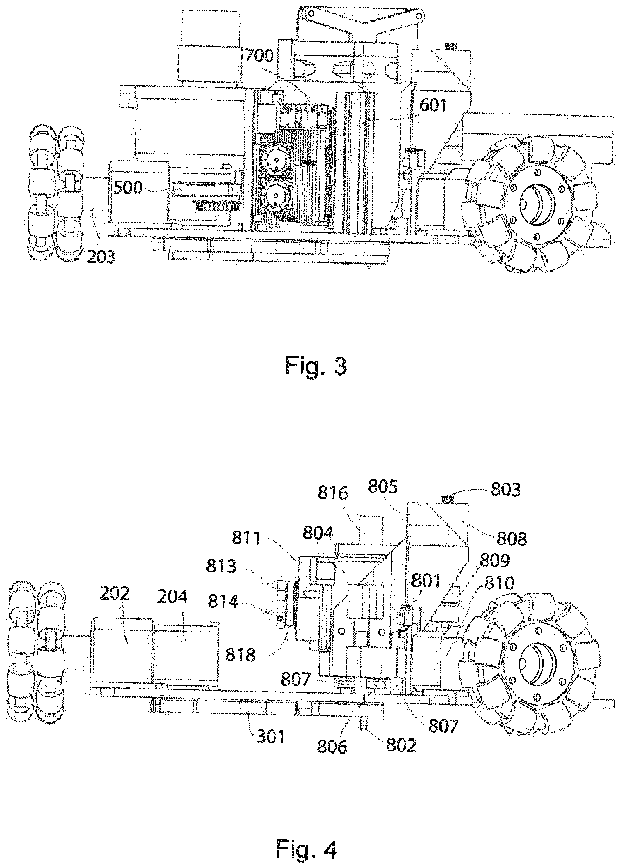

Fig. 3 is the side view of the device in a preferred configuration of the present invention;
Fig. 4 shows a view of the device from a different side than in fig. 3 in a preferred configuration of the present invention;

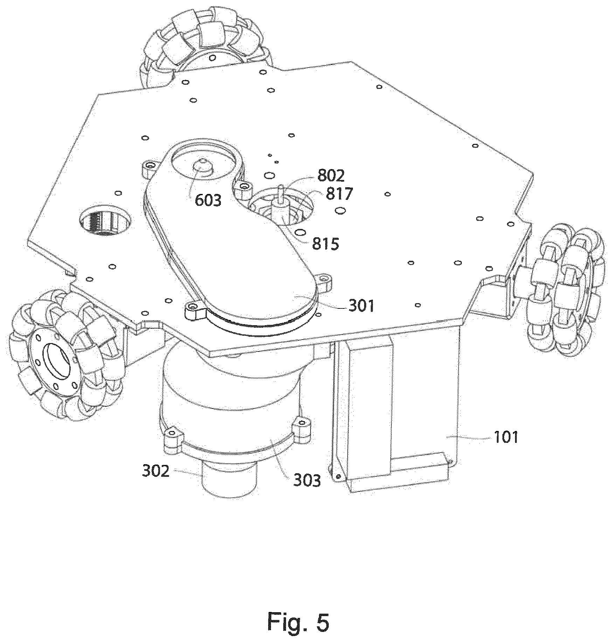

Fig. 5 is a view of the device from the underside in a preferred configuration of the present invention.

### Embodiment 1:

The mobile cutting and notching device consists of several assemblies attached to a rigid base **900.** The low-level controller unit **100** consists of a low-level controller **101** and a mounting bracket **102.** The mounting bracket **102** is screwed to the base **900.** Mobility of the structure is ensured by three drive wheel assemblies **200** arranged with radial axes, each at an angular distance of approximately 120°. The wheels are omni-directional **201**, so-called Swedish wheels, facing outwards. The omni-directional wheels **201** consist of two wheel bodies **207** in which rolling elements **206** are embedded around the circumference, the rolling elements being in direct contact with the substrate on which the device platform moves. The omni-directional wheel **201** is connected to the drive motor gearbox **205** by means of a connector **203** joining the wheel to the shaft of the gearbox **205.** The gearbox **205** is integrated into the drive motor **204** and is the component that connects to the gearbox assembly **202** with the drive motor **204.** The drive motors **204** are connected by wires to the low-level controller **101.**

From a functional point of view, one of the most important components of the device is the cutting tool unit **600b** which consists of a cutting tool **602** in the form of a laser equipped with a pressure nozzle **603.** The laser is mounted on a height-adjusting rail **601** for the cutting tool **602**, the rail being connected to the base **900.** The cutting tool unit **600** is wired to a power source such as the battery **400** and to the low-level controller **101,** which is responsible for switching on and modulating the laser power to achieve cutting, partial cutting or engraving. In order to achieve a clean cut edge, a compression system is used, comprising a compressor **1002** connected via a compressed air hose **1001** to the laser nozzle **603.** This system is connected to the battery **400** and the low-level controller **101**, which turns it on during laser operation. In addition to compressed air blast, the second pneumatic system is an negative pressure unit **300**, equipped with a suction turbine **302** mounted tightly in the exhaust extraction housing **303**, tightly connected to the base **900** above the exhaust filter with housing **301.** The purpose of the filter **301**, with its suitable properties, is to extract the exhaust fumes generated during laser cutting; it is pressed from below against the base by its exhaust filter housing, which is at the same time the suction duct leading to the laser nozzle from where the exhaust fumes/vapours are extracted during cutting, notching or engraving.

The device is equipped with a vision system that provides for a high degree of movement accuracy. The vision system consists of a camera **500** mounted on the base **900.** The lens of the camera **500** is positioned parallel to the sheet, at a distance that provides the greatest possible field of view. The camera is connected to a high-level controller **700**, which evaluates the image and makes corrections to the movement so that the actual path of the device is a representation of the downloaded file. The operation of the machine according to the present invention by the operator is possible by means of a connection implemented through a network formed by the high-level controller **700**, which is a minicomputer and is responsible for the software, communication with the low-level controller **101**, processing the image from the camera **500** and sending the appropriate commands to the controller to correct errors in the actual position of the device with respect to what it should be according to a pre-set shape, e.g. while cutting out a packaging template. The high-level controller **700** is connected to the battery **400**, the camera **500** and the low-level controller **101.** The operating time of the device is limited by the battery **400.** When the pattern takes longer to cut out, the device detects that the battery **400** is low and then moves to the edge of the machined material to recharge, stopping the programme, but not interrupting it. Once the battery **400** is recharged, the device resumes operation.

### Embodiment 2:

A mobile device as in embodiment 1, whereby it is provided with a creasing unit **800**, creasing a sheet of material along which the device according to the present invention moves. The working element is a creasing tip **802**, shaped so as to achieve the right parameters at the creasing point. Different materials can be used at the end of the tip. It moves in an oscillatory forward and backward motion. It is rigidly connected to a sleeve **815** supported by bearings, moving in the same manner as the creasing tip **802** inside the lower sleeve bearing **817** in the lower part of the creasing unit body **804** and the upper sleeve bearing **816.** The sleeve **815** is driven via a transversely mounted shaft with a gear wheel **813** and eccentric **814.** This part indirectly transmits the rotation from the crease unit drive motor **812** via a toothed belt **818** wound onto a gear wheel **813** on the shaft of the crease unit drive motor **812.** The crease unit drive motor **812** is attached to the drive motor mount **811** and is connected to the battery **400** and the low-level controller **101.** The drive motor mount **811** is the tensioning element for the toothed belt **818** and is detachably connected to the creasing unit body **804.** The height of the creasing unit **800** is set by means of a crease unit height motor **810**, the shaft axis of which is vertical and connected via a coupling **809** to an adjustment screw **803** rotating in a nut **808** - this kinematic pair holds the entire module at the set height. The crease unit height motor **810** is attached to the base **900.** The nut **808** is connected immovably to the creasing unit holder **805** connecting the height adjustment elements, the body **804** and the linear bearings of the holder **806** moving along the pins **807** fixed perpendicularly to the base **900** - thus the creasing tip 802 only moves in one direction. To enable the machine to set the correct height for the creasing tool, a limit switch **801** has been installed, which, when pressed during the first lift from start-up, sends a signal to the low-level controller **101** about the starting position from which the height is measured during operation, based on the number of revolutions of the crease unit height motor **810**, which is responsible for adjusting the height. The limit switch **801** is wired to the low-level controller **101** and attached to the base **900.**

### LIST OF SYMBOLS:

- 100 -: low-level controller unit
- 101 -: low-level controller
- 102 -: mounting bracket
- 200 -: drive wheel assembly
- 201 -: omni-directional wheel
- 202 -: gearbox assembly
- 203 -: connector
- 204 -: drive motor
- 205 -: drive motor gearbox
- 206 -: rolling element
- 207 -: wheel body
- 300 -: negative pressure unit
- 301 -: exhaust filter with housing
- 302 -: suction turbine
- 303 -: exhaust extraction housing
- 400 -: battery
- 500 -: camera
- 600 -: cutting tool unit
- 601 -: rail
- 602 -: cutting tool
- 603 -: pressure nozzle
- 700 -: high-level controller
- 800 -: creasing unit
- 801 -: limit switch
- 802 -: creasing tip
- 803 -: adjustment screw
- 804 -: creasing unit body
- 805 -: creasing unit holder
- 806 -: linear bearing
- 807 -: feed pin
- 808 -: nut
- 809 -: coupling
- 810 -: crease unit height motor
- 811 -: motor mount
- 812 -: crease unit drive motor
- 813 -: gear wheel
- 814 -: eccentric
- 815 -: sleeve
- 816 -: upper sleeve bearing
- 817 -: lower sleeve bearing
- 818 -: toothed belt
- 900 -: base
- 1001 -: compressed air hose
- 1002 -: compressor

## Claims

1. A mobile device with multifunctional tools, in the form of a self-moving platform providing movement of the device in the X and Y axes, comprising a rigid base with a drive unit and a tool assembly moved in the Z axis, **characterised in that** at least the following are attached to the rigid base (900):
• drive wheel assemblies (200) arranged with their axes radially, each at essentially equal angular distance, with omni-directional wheels (201) attached by axle to the shaft of the drive motor (204), the common radius on which the omni-directional wheels are mounted being the distance from the centre of this circle to half the thickness of the wheels;
• the low-level controller unit (100), consisting of at least the low-level controller (101);
• the high-level controller unit (700), which is a microcomputer with software;
• the cutting tool unit (600), comprising at least a cutting tool (602);
• the power source (400);
• the camera (500);
whereby the drive wheel assemblies (200) and the cutting tool unit (600), are connected to the low-level controller unit (100), and the high-level controller unit (700), which are in principle connected to the power source (400) and to the camera (500).

2. A mobile device according to claim 1, **characterised in that** a creasing unit (800) comprising at least a working element, preferably a creasing tip (802), and a crease unit drive motor (812) are mounted to a rigid base, the creasing unit (800) being connected to a low-level controller unit (100), and a high-level controller unit (700).

3. A mobile device according to claim 2, **characterised in that** a creasing tip (802) is rigidly connected to a sleeve (815) supported by a lower bearing (817) in the lower part of the creasing unit body (804) and an upper bearing (816), the sleeve (815) being driven by a shaft with a gear wheel (813) and an eccentric (814) mounted transversely to it.

4. A mobile device according to claim 3, **characterised in that** a crease unit drive motor (812) is attached to a drive motor mount (811) and is connected to a power source (400) and a low-level controller (101), the drive motor mount (811) being detachably connected to the creasing unit body (804).

5. A mobile device according to claim 3, **characterised in that** it comprises a crease unit height motor (810) attached to a base (900), the vertical axis of the shaft of which is connected via a coupling (809) to an adjustment screw (803), rotating in a nut (808) fixedly connected to the creasing unit holder (805), connecting the creasing unit body (804) and the linear bearings of the holder (806) moving along pins (807) fixed perpendicularly to the base (900).

6. A mobile device according to claim 5, **characterised in that** it comprises a limit switch (801), wired to a low-level controller (101) and attached to a base (900).

7. A mobile device according to claim 2, **characterised in that** the working element of the creasing unit (800), is a creasing wheel.

8. A device according to claim 1 or 2, **characterised in that** it comprises three drive wheel assemblies (200), spaced at an angular distance essentially equal to 120°.

9. A mobile device according to claim 1 or 2, **characterised in that** the omni-directional wheels (201) comprise at least one wheel body (207) in which rolling elements (206) are circumferentially mounted and are connected to the drive motor gearbox (205) by means of a connector (203) joining the wheel to the shaft of the gearbox, which is integrated with the drive motor (204) and constitutes a component that connects the gearbox assembly (202) with the motor (204), which in turn is connected by wires to the low-level controller (101).

10. A mobile device according to claim 1 or 2, **characterised in that** the cutting tool (602) is a laser equipped with a pressure nozzle (603) and mounted on a rail (601) connected to a base (900).

11. A mobile device according to claim 10, **characterised in that** it comprises a compression system comprising a compressor (1002) connected by a compressed air hose (1001) to a laser nozzle (603).

12. A mobile device according to claim 10, **characterised in that** it comprises an negative pressure unit (300), provided with a suction turbine (302) tightly mounted in an exhaust extraction housing (303), tightly connected to a base (900) above an exhaust filter with housing (301).

13. A mobile device according to claim 1 or 2, **characterised in that** the drive motor (204), can be a stepper motor or other motor with an encoder suitable for monitoring the motor.

14. A mobile device according to claim 1 or 2, **characterised in that** it is equipped with a print application unit comprising a pen, pencil, ballpoint pen or printer, or a labeller, and/or an adhesive applicator or other type of plastic extruder, and/or a water cutting, air cutting and/or milling unit.
